# EUROPEAN PATENT APPLICATION

(11) **EP 4 776 153 A2**
(43) Date of publication of application: **15.07.2026**
(21) Application number: 24863342.2
(22) Date of filing: 04.09.2024
(51) Int. Cl.: G06F 16/332, G06F 40/20

(54) **QUESTION AND ANSWER SEARCHING METHOD AND APPARATUS, AND TERMINAL DEVICE**

(30) Priority: 05.09.2023 CN 202311139379
(71) Applicant: Lemon Inc., Grand Cayman, KY1-1205 (KY)
(72) Inventor: XUE, Weiwei, Beijing 100028 (CN); XU, Jie, Beijing 100028 (CN); GUO, Feifei, Beijing 100028 (CN)
(74) Representative: Marks & Clerk LLP
(86) International application number: PCT/SG2024/050563
(87) International publication number: WO 2025/053789

(57) **Abstract**

The present disclosures provides a question and answer searching method and apparatus, and a terminal device. The method comprises: acquiring question information; on the basis of the question information, determining, among a plurality of search modes, at least one search mode corresponding to the question information; on the basis of the at least one search mode, processing the question information, and obtaining answer information corresponding to the question information; and on the basis of the answer information, performing answer display.

## Description

The present application claims priority to Chinese Patent Application No. 202311139379.X filed on September 5, 2023, which is incorporated herein by reference in its entirety as a part of the present application.

### TECHNICAL FIELD

Embodiments of the present disclosure relate to a question answering search method and apparatus, and a terminal device.

### BACKGROUND

Search engines may provide users with answers to their questions. For example, a user may enter a question in an input field of a search engine, and after obtaining an answer to the question, the search engine may display the answer.

At present, traditional search engines can process user-entered questions based on knowledge graphs or question and answer text extraction technology, to obtain answers to the questions. However, with the development of multimedia technology, the Internet contains a large amount of image information and video information, which makes it difficult to fully and accurately obtain answers to questions based on the above-mentioned method, resulting in low accuracy of the retrieved answers.

### SUMMARY

An embodiment of the present disclosure provides a question answering search method. The method includes:
acquiring question information;
determining, from a plurality of search modes, at least one search mode corresponding to the question information based on the question information;
processing the question information based on the at least one search mode to obtain answer information corresponding to the question information, and performing answer display based on the answer information.

An embodiment of the present disclosure provides a question answering search apparatus. The question answering search apparatus includes an acquisition module, a determination module, a processing module, and a display module, where
the acquisition module is configured to acquire question information;
the determination module is configured to determine, from a plurality of search modes, at least one search mode corresponding to the question information based on the question information;
the processing module is configured to process the question information based on the at least one search mode to obtain answer information corresponding to the question information; and the display module is configured to perform answer display based on the answer information.

An embodiment of the present disclosure provides an electronic device. The electronic device includes: a processor and a memory,
where the memory stores computer-executable instructions; and
the processor executes the computer-executable instructions stored in the memory, to cause the processor to perform the question answering search method that may be involved in various embodiments of the present disclosure.

An embodiment of the present disclosure provides a computer-readable storage medium having computer-executable instructions stored therein that, when executed by a processor, cause the question answering search method that may be involved in various above-mentioned embodiments of the present disclosure to be implemented.

### BRIEF DESCRIPTION OF DRAWINGS

In order to describe the technical solutions in the embodiments of the present disclosure more clearly, the accompanying drawings for describing the embodiments are briefly described below. Apparently, the accompanying drawings in the following description are some embodiments of the present disclosure, and those of ordinary skill in the art may still derive other accompanying drawings from these accompanying drawings without creative efforts.
Fig. 1 is a schematic diagram of an application scenario according to an embodiment of the present disclosure;
Fig. 2 is a schematic flowchart of an answer search method according to an embodiment of the present disclosure;
Fig. 3 is a schematic diagram of a process of acquiring question information according to an embodiment of the present disclosure;
Fig. 4 is a schematic diagram of search modes according to an embodiment of the present disclosure;
Fig. 5 is a schematic diagram of determining question categories according to an embodiment of the present disclosure;
Fig. 6A is a schematic diagram of displaying target display information according to an embodiment of the present disclosure;
Fig. 6B is another schematic diagram of displaying target display information according to an embodiment of the present disclosure;
Fig. 6C is another schematic diagram of displaying target display information according to an embodiment of the present disclosure;
Fig. 7 is a schematic diagram of a method for determining answer information according to an embodiment of the present disclosure;
Fig. 8 is a schematic diagram of a process of determining sub-answer information groups according to an embodiment of the present disclosure;
Fig. 9 is a schematic diagram of a process of a question answering search method according to an embodiment of the present disclosure;
Fig. 10 is a schematic structural diagram of a question answering search apparatus according to an embodiment of the present disclosure; and
Fig. 11 is a schematic structural diagram of an electronic device according to an embodiment of the present disclosure.

### DETAILED DESCRIPTION

Exemplary embodiments are described in detail herein, and examples thereof are illustrated in the accompanying drawings. When the following description relates to the accompanying drawings, the same numerals in different accompanying drawings denote the same or similar elements, unless otherwise indicated. The implementations described in the following exemplary embodiments do not represent all the implementations consistent with the present disclosure. Rather, they are merely examples of apparatuses and methods that are consistent with some aspects of the present disclosure and that are described in detail in the appended claims.

For ease of understanding, concepts involved in the embodiments of the present disclosure are described below.

Terminal device: a device with a wireless transceiver function. The terminal device may be deployed on land, including indoors or outdoors, handheld, wearable, or vehicle-mounted. The terminal device may be a mobile phone, a tablet computer (Pad), a computer having a wireless transceiver function, a virtual reality (VR) terminal device, an augmented reality (AR) terminal device, a wireless terminal in industrial control, a vehicle-mounted terminal device, a wireless terminal in self driving, a wireless terminal device in remote medical, a wireless terminal device in a smart grid, a wireless terminal device in transportation safety, a wireless terminal device in a smart city, a wireless terminal device in a smart home, a wearable terminal device, etc. The terminal device in the embodiments of the present disclosure may also be referred to as a terminal, user equipment (UE), an access terminal device, a vehicle-mounted terminal, an industrial control terminal, a UE unit, a UE station, a mobile station, a mobile console, a remote station, a remote terminal device, a mobile device, a UE terminal device, a wireless communication device, a UE agent, a UE apparatus, etc. The terminal device may also be stationary or mobile.

In the related art, a user may enter a question that the user wants to ask in an input field of a search engine, and the search engine may identify the question and obtain an answer to the question from a database. After obtaining the answer, the search engine may display the answer to the user. At present, traditional search engines may obtain answers to user-entered questions based on knowledge graphs or question and answer text extraction technology. For example, a plurality of knowledge graphs may be pre-stored in the database, and after obtaining the user's question, the search engine may determine an answer associated with the question based on the knowledge graphs. With the development of multimedia technology, the Internet may contain a large amount of image information and video information, and the image information and the video information may also be displayed as answers. However, based on the knowledge graphs or the question and answer text extraction technology, search engines may fail to accurately identify image information and video information, which makes it difficult for the search engines to accurately and fully obtain answers to questions, resulting in low accuracy of the retrieved answers.

In order to solve the technical problem in the related art, the embodiments of the present disclosure provide a question answering search method. A terminal device may acquire question information and perform semantic recognition processing on the question information to obtain target requirement information of the question information; the terminal device may determine at least one search mode from a plurality of search modes based on the target requirement information; the terminal device may acquire sub-answer information corresponding to each search mode to obtain at least one piece of sub-answer information, where the sub-answer information is obtained by processing the question information using the search mode; and the terminal device may determine the quantity of the at least one piece of sub-answer information, determine answer information corresponding to the question information based on the at least one piece of sub-answer information and the quantity of the at least one piece of sub-answer information, and perform answer display based on the answer information. In the above-mentioned method, since the terminal device can determine at least one search mode matching the question information, the terminal device can accurately and quickly obtain the answer to the question based on the search mode, thereby improving the accuracy and efficiency of the retrieved answers. In addition, since the terminal device can determine the answer to the question based on the answer information obtained in each search mode, the reliability of the retrieved answers can be improved.

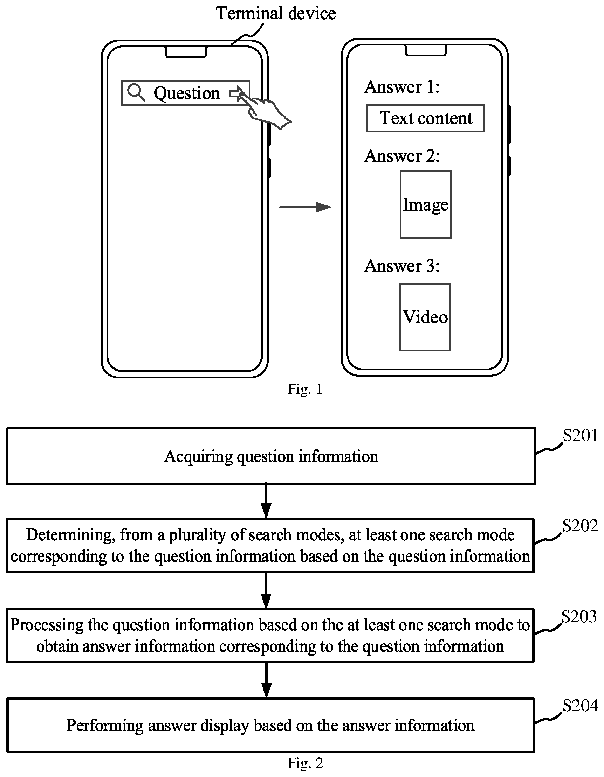

An application scenario according to the embodiments of the present disclosure is described below in detail with reference to Fig. 1.

Fig. 1 is a schematic diagram of an application scenario according to an embodiment of the present disclosure. Referring to Fig. 1, the terminal device is included. A display page of the terminal device is a search engine page, and the search engine page may include a search bar. A user may enter a question in the search bar and tap a search control. The terminal device may determine at least one search mode corresponding to the question and obtain an answer to the question based on the search mode. An answer 1 may include text content, an answer 2 may include an image, and an answer 3 may include a video. In this way, the terminal device can obtain the answer to the question based on the search mode matching the question, thereby improving the accuracy and efficiency of the obtained answer. In addition, the terminal device can display the answer in a multi-modal manner, thereby improving the display effect of the answer and improving the user experience.

The technical solutions of the present disclosure and how the technical solutions of the present disclosure solve the above-mentioned technical problem are described below in detail with specific embodiments. The following specific embodiments may be combined with each other, and details about same or similar concepts or processes may not be described in some embodiments again. The embodiments of the present disclosure are described below with reference to the accompanying drawings.

Fig. 2 is a schematic flowchart of an answer search method according to an embodiment of the present disclosure. Referring to Fig. 2, the method may include the following steps.

S201: acquiring question information.

An execution entity of this embodiment of the present disclosure may be a terminal device, or may be a question answering search apparatus provided in the terminal device. The question answering search apparatus may be implemented based on software, or may be implemented based on a combination of software and hardware. This is not limited in this embodiment of the present disclosure. Optionally, the terminal device may be any device having a display function, for example, the terminal device may be a computer, a mobile phone, etc. This is not limited in this embodiment of the present disclosure.

The question information may be information related to a question entered by a user. The terminal device may determine the question information based on search content entered by the user. For example, a search engine may include a question input field in which the user may enter text content, and the terminal device may determine the text content as the question information.

Optionally, the question information in this embodiment of the present disclosure may be information that needs to be answered. For example, the question information may be answerable information such as "What is the highest peak in the world?", "What is the deepest trench in the world?", and "Who is the tallest person in the world?". For example, in response to the user entering only a city name in the input field of the search engine, the city name is not question information. However, in response to the user entering not only the city name but also the text "When was it established?" in the input field of the search engine, the terminal device may determine the text content in the search bar as the question information.

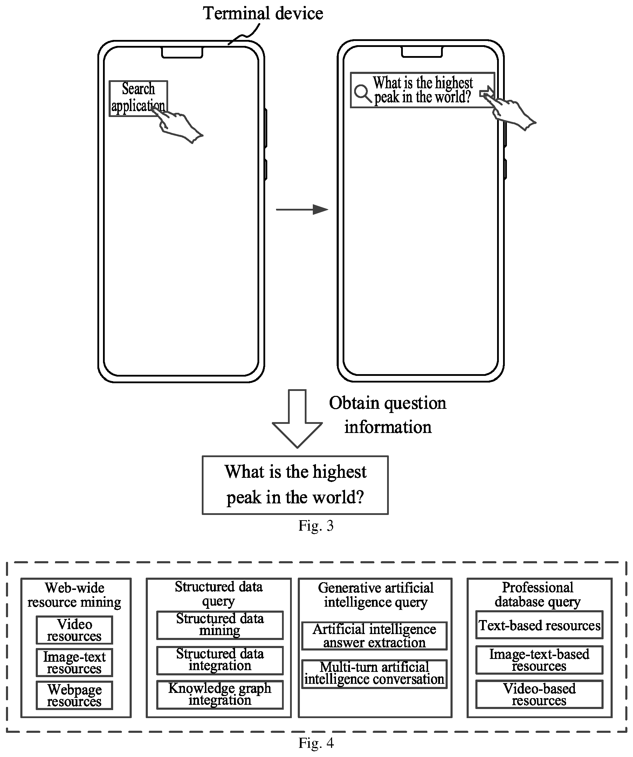

A process of acquiring question information in this embodiment of the present disclosure is described below with reference to Fig. 3.

Fig. 3 is a schematic diagram of a process of acquiring question information according to an embodiment of the present disclosure. Referring to Fig. 3, the terminal device is included. A display page of the terminal device may include a search application. When a user taps the search application, the display page of the terminal device may navigate to a search page corresponding to the search application. The search page may include a search bar. After the user enters the text "What is the highest peak in the world?" in the search bar and taps a search control, the terminal device may identify the text content entered by the user to obtain the question information. The question information may be: What is the highest peak in the world?

S202: determining, from a plurality of search modes, at least one search mode corresponding to the question information based on the question information.

The search mode may be a way to obtain an answer corresponding to the question information. For example, the terminal device may process the question information based on the search mode to obtain the answer corresponding to the question information based on the search mode.

Optionally, the search mode may include at least one of the following: web-wide resource mining, structured data query, generative artificial intelligence query, and professional database query.

Web-wide resource mining may be a search mode in which the terminal device obtains an answer from indexed resources across the entire web. For example, given the abundance of content in the indexed resources across the entire web, the terminal device may, based on the search mode, understand and extract the content associated with the question information, to obtain the answer to the question information.

Structured data query is used to obtain an answer to question information having structured attributes. For example, in response to the question information being "What are the tourist attractions in the city?", the question information has structured attributes (i.e., attributes of the city), and the terminal device may obtain the answer to the question information based on the search mode of structured data query.

Generative artificial intelligence query is used to obtain an answer to question information including low-frequency words. For example, in response to the question information including a large number of low-frequency words (e.g., long-tail keywords, difficult-to-understand words, etc., which are not limited in this embodiment of the present disclosure), the terminal device may obtain the answer to the question information based on the mode of generative artificial intelligence query.

Professional database query is used to obtain an answer to a question including technical terms. For example, in response to the question information including a large number of medical terms, the terminal device may obtain the answer to the question information based on the search mode of professional database query.

The search modes are described below with reference to Fig. 4.

Fig. 4 is a schematic diagram of search modes according to an embodiment of the present disclosure. Referring to Fig. 4, a search mode of web-wide resource mining, a search mode of structured data query, a search mode of generative artificial intelligence query, and a search mode of professional database query are included. Web-wide resource mining may be used for searching based on video resource mining, image-text resource mining, and webpage resource mining. Structured data query may be used for searching based on structured data mining, structured data ingestion, and knowledge graph ingestion. Generative artificial intelligence query may be used for searching based on artificial intelligence answer extraction and multi-turn artificial intelligence conversations. Professional database query may be used to retrieve text-based resources, image-text-based resources, and video-based resources.

Optionally, the terminal device may use the search mode of generative artificial intelligence query based on a third-party ingestion mode, and the terminal device may also be provided with a generative artificial intelligence query apparatus. This is not limited in this embodiment of the present disclosure.

It should be noted that the text-based resources, the image-text-based resources, and the video-based resources in the search mode of professional database query may be pre-stored resources. For example, in practical application scenarios, it is difficult to find accurate answers to most professional questions. Therefore, the terminal device may pre-store answers corresponding to questions from a plurality of professional fields in a professional database, so that the terminal device can answer the professional questions accurately.

It should be noted that the terminal device may acquire the professional database based on any feasible implementation. For example, a user may report a plurality of profession-related questions, and after the questions are answered by professionals, the terminal device may obtain answers corresponding to the professional questions and store the answers in the professional database, or after the user collects the answers to the professional questions, the terminal device may store the answers in the professional database. This is not limited in this embodiment of the present disclosure.

It should be noted that the question information may correspond to one search mode, or the question information may correspond to a plurality of search modes. This is not limited in this embodiment of the present disclosure.

It should be noted that the search mode may be a preset mode, or may be based on any other feasible search mode (e.g., a third-party integration search mode). This is not limited in this embodiment of the present disclosure.

The terminal device may determine, from a plurality of search modes, at least one search mode corresponding to the question information based on the following feasible implementation: performing semantic recognition processing on the question information to obtain target requirement information of the question information, and determining the at least one search mode from the plurality of search modes based on the target requirement information.

The target requirement information may indicate a need of the user for querying the question information. For example, the target requirement information may include a motivation of the user for querying the question information. For example, the target requirement information may be querying for objective knowledge, learning a method for solving a problem, acquiring information associated with the question information, etc. This is not limited in this embodiment of the present disclosure.

Optionally, the terminal device may process the question information based on a semantic recognition model, to obtain the target requirement information. For example, the terminal device may input the question information into a trained semantic recognition model, and the semantic recognition model may output the target requirement information corresponding to the question information.

Optionally, the terminal device may process the question information based on a query algorithm, to obtain the target requirement information. For example, the terminal device may process the question information based on a query algorithm (e.g., a query analysis algorithm), to obtain the target requirement information of the question information.

It should be noted that the terminal device may also determine the target requirement information of the question information based on any feasible implementation. This is not limited in this embodiment of the present disclosure.

The terminal device determining the at least one search mode from the plurality of search modes based on the target requirement information may specifically include: determining at least one question category corresponding to the question information based on the target requirement information, determining at least one search mode corresponding to the at least one question category, and determining the at least one search mode corresponding to the at least one question category as the search mode corresponding to the question information.

The question category may include at least one of the following: a basic question type, a structured question type, a long-tail keyword question type, or a professional question type.

The basic question type refers to a less difficult question corresponding to the question information. For example, when the target requirement information corresponding to the question information is to query for objective knowledge, the question corresponding to the question information is less difficult, and the question category for the question information may be the basic question type.

The structured question type may be a question of which text content in the question information includes structured attributes. For example, when the target requirement information corresponding to the question information is to query for objective knowledge, and the question information includes a city name, the question category for the question information may be the structured question type.

The long-tail keyword question type may be a question of which text content in the question information includes long-tail keywords. For example, when the target requirement information corresponding to the question information is to acquire writing inspiration, and the question information includes long-tail keywords, the question category for the question information may be the long-tail keyword question type.

The professional question type may be a question of which text content in the question information includes technical terms. For example, when the target requirement information corresponding to the question information is to learn a method for solving a problem, and the question information includes technical terms, the question category for the question information may be the professional question type.

Optionally, the terminal device may process the target requirement information corresponding to the question information based on a question classification model, to obtain at least one question category corresponding to the question information. For example, the question classification model may be a pre-trained model, and after receiving the target requirement information, the question classification model may determine the category of the target requirement information, to obtain the question category corresponding to the question information.

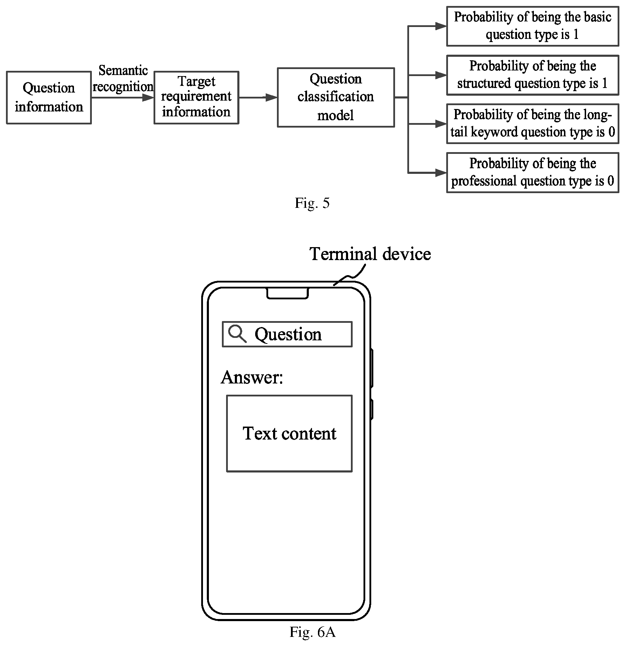

The determination of the question categories corresponding to the question information is described below with reference to Fig. 5.

Fig. 5 is a schematic diagram of determining question categories according to an embodiment of the present disclosure. Referring to Fig. 5, the question information is included. The terminal device (not shown in Fig. 5) may perform semantic recognition on the question information to obtain the target requirement information of the question information. The terminal device may input the target requirement information into the question classification model, and the question classification model may output a probability that the question information belongs to each question type. The probability that the question information belongs to the basic question type is 1, the probability that the question information belongs to the structured question type is 1, the probability that the question information belongs to the long-tail keyword question type is 0, and the probability that the question information belongs to the professional question type is 0. Therefore, the question category corresponding to the question information includes the basic question type and the structured question type.

The question category is in a one-to-one correspondence with the search mode, and the terminal device may determine, based on the correspondence between the question category and the search mode, at least one search mode that corresponds to at least one question category corresponding to the question information. For example, each question category has a corresponding search mode, where the basic question type may correspond to the search mode of web-wide resource mining, the structured question type may correspond to the search mode of structured data query, the long-tail keyword question type may correspond to the search mode of generative artificial intelligence query, and the professional question type may correspond to the search mode of professional database query.

Optionally, the terminal device may determine the at least one search mode corresponding to the at least one question category as the search mode corresponding to the question information. For example, in response to the question category corresponding to the question information being the basic question type and the structured question type, the basic question type corresponds to the search mode of web-wide resource mining, and the structured question type corresponds to the search mode of structured data query, the terminal device can determine that the search mode corresponding to the question information may include the search mode of web-wide resource mining and the search mode of structured data query.

For example, for basic questions, the terminal device may make queries based on more indexed resources across the entire web; for a question related to attributes or relationships of entities such as personal names, place names, book titles, and movie titles (structured question types), the terminal device may query more information based on a pre-processed structured database; for a professional question or a question with higher requirements for the users answering the question, the terminal device may acquire an answer based on a preset professional database; and in response to difficult-to-understand words or long-tail keywords appearing, the terminal device may further clarity the specific question of the user's query based on a multi-turn artificial intelligence conversation capability, to obtain an answer to the question.

In this way, for different types of questions, the terminal device can determine search modes corresponding to the questions, thereby improving the accuracy of the retrieved answers.

S203: processing the question information based on the at least one search mode to obtain answer information corresponding to the question information.

Optionally, the terminal device may process the question information based on the at least one search mode, to obtain the answer information corresponding to the question information. For example, in response to the question information corresponding to the search modes of web-wide resource mining and structured data query, the terminal device may process the question information based on the mode of web-wide resource mining to obtain an answer 1 corresponding to the question information, the terminal device may process the question information based on the search mode of structured data query to obtain an answer 2 corresponding to the question information, and the terminal device may obtain the answer information corresponding to the question information based on the answer 1 and the answer 2.

S204: performing answer display based on the answer information.

The terminal device performing answer display based on the answer information may specifically include: extracting at least one piece of information to be displayed from the answer information, determining target display information corresponding to each piece of information to be displayed to obtain at least one piece of target display information, and displaying the at least one piece of target display information.

The information to be displayed may include a text, a video, and an image. For example, after the terminal device processes the question information based on at least one search mode, the answer information obtained may include the text, the video and the image, and the terminal device may extract the text, the video and the image from the answer information to obtain the information to be displayed.

Optionally, the terminal device may extract the text, the video and the image from the answer information based on any feasible implementation. This is not limited in this embodiment of the present disclosure.

Optionally, for a piece of information to be displayed, the terminal device determining the target display information corresponding to the information to be displayed includes the following three cases.

Case 1: The information to be displayed is the text.

In response to the information to be displayed being the text, the terminal device may determine that the target display information is the text. For example, in response to the information to be displayed that is extracted by the terminal device including the text, not including the image and the video, the terminal device may determine that the target display information is the text.

Case 2: The information to be displayed is the video.

In response to the information to be displayed being the video, the terminal device may determine key description information corresponding to the video or determine at least one key frame in the video, and determine that the target display information includes the video and the key description information, or determine that the target display information includes the video and the at least one key frame.

The key description information may be text content that describes the video. For example, the key description information may be a title of the video, subtitles in the video, etc. This is not limited in this embodiment of the present disclosure.

For example, in response to the key description information being the title of the video, the terminal device may obtain the title of the video when acquiring the video.

For example, in response to the key description information being the subtitles in the video, after acquiring the video, the terminal device may identify video frames in the video, to obtain the subtitles for each video frame. The terminal device may obtain the key description information by aggregating a plurality of high-frequency phrases among a plurality of video frames, or the terminal device may obtain the key description information by processing the subtitles of a plurality of video frames based on any other feasible implementation. This is not limited in this embodiment of the present disclosure.

The key frame is associated with the answer corresponding to the question information. For example, the key frame may be a start video frame for the answer information corresponding to the question information. For example, in response to the video starting answering the question information from the 100*^{th}* frame, the terminal device may determine the 100*^{th}* frame of the video as the key frame. For example, in response to the 200*^{th}* frame to the 2000*^{th}* frame of the video corresponding to the answer to the question information, the terminal device may determine the 200*^{th}* frame of the video as the key frame.

Optionally, the terminal device may process the video based on an image-to-text model to obtain the key frame in the video. For example, the terminal device may understand the key frame of the video based on the image-to-text model to obtain image content corresponding to each key frame, and the terminal device may determine the answer corresponding to the question information based on image content corresponding to each image frame, and determine the key frame in the video. For example, in response to the question information being "How to make scrambled eggs with tomatoes" and the retrieved information to be displayed including a video, the terminal device processes each video frame in the video based on the image-to-text model to obtain text content corresponding to each video frame, and in response to the text content corresponding to the 100*^{th}* frame being "Tomato and eggs", the terminal device may determine the 100*^{th}* frame as the key frame of the video.

Optionally, the terminal device may obtain the key frame in the video based on the subtitles of each video frame in the video. For example, in response to the question information being "How to make scrambled eggs with tomatoes" and the retrieved information to be displayed including a video, the terminal device may acquire the subtitles in each video frame (the terminal device may obtain the subtitles in each video frame based on any feasible implementation, which is not limited in this embodiment of the present disclosure) to obtain the subtitles corresponding to each video frame. In response to the subtitles corresponding to the 300*^{th}* frame being "First prepare one tomato and two eggs", the terminal device may determine the 300*^{th}* frame as the key frame of the video.

It should be noted that the terminal device may determine the key frame of the video based on any feasible implementation. This is not limited in this embodiment of the present disclosure.

Case 3: The information to be displayed is the image.

In response to the information to be displayed being the image, the terminal device may determine that the target display information is the image, or determine that the target display information includes the image and image description information of the image. For example, in response to the information to be displayed is the image, the terminal device may determine that the target display information is the image and a text that describes image content (image description information).

Optionally, the terminal device may determine the image description information of the image based on any feasible implementation. This is not limited in this embodiment of the present disclosure.

In the above-mentioned question answering search method, since the terminal device can determine the search mode matching the question information, the terminal device can fully and accurately acquire the answer corresponding to the question based on the search mode, thereby improving the reliability of the acquired answer. In addition, due to the matching between the search mode and the question, the terminal device can quickly acquire the answer corresponding to the question, thereby improving the accuracy and efficiency of the retrieved answers.

A scenario in which the terminal device displays at least one piece of target display information is described below with reference to Fig. 6A to Fig. 6C.

Fig. 6A is a schematic diagram of displaying target display information according to an embodiment of the present disclosure. Referring to Fig. 6A, the terminal device is included. A display page of the terminal device is a search page. The search page may include a search bar. After the user enters a question in the search bar, the terminal device may acquire information to be displayed for the question. Since the information to be displayed is the text, the terminal device determines that the target display information is the text, and the answer displayed by the terminal device is text content.

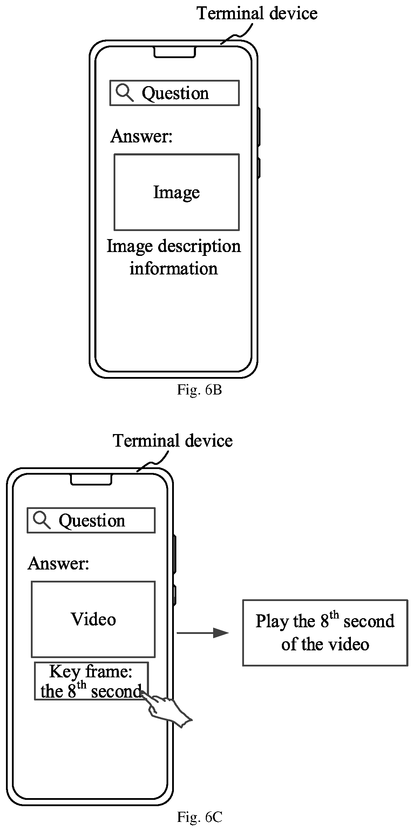

Fig. 6B is another schematic diagram of displaying target display information according to an embodiment of the present disclosure. Referring to Fig. 6B, the terminal device is included. A display page of the terminal device is a search page. The search page may include a search bar. After the user enters a question in the search bar, the terminal device may acquire information to be displayed for the question. Since the information to be displayed is an image, the terminal device may determine image description information corresponding to the image, and determine that the target display information is the image and the image description information, and the answer displayed by the terminal device includes the image and the image description information of the image.

Fig. 6C is another schematic diagram of displaying target display information according to an embodiment of the present disclosure. Referring to Fig. 6C, the terminal device is included. A display page of the terminal device is a search page. The search page may include a search bar. After the user enters a question in the search bar, the terminal device may acquire information to be displayed for the question. Since the information to be displayed is a video, the terminal device may determine a key frame corresponding to the video (the key frame being the 8^{th} second of the video) and determine that the target display information is the video and the key frame, and the answer displayed by the terminal device includes the video and the key frame of the video. When the user taps the key frame: at the 8^{th} second, the terminal device may play the 8*^{th}* second of the video.

It should be noted that the answer displayed by the terminal device may include a plurality of segments of texts, a plurality of images and a plurality of videos, and the video may also include a plurality of key frames. This is not limited in this embodiment of the present disclosure.

In this way, the terminal device can display the answer corresponding to the question information in a multi-modal manner, thereby improving the display effect of the answer.

The embodiments of the present disclosure provide a question answering search method. In the method, the terminal device may acquire the question information and perform semantic recognition processing on the question information to obtain the target requirement information of the question information; the terminal device may determine the at least one search mode from the plurality of search modes based on the target requirement information, and process the question information based on the at least one search mode to obtain the answer information corresponding to the question information; and the terminal device may extract the at least one piece of information to be displayed from the answer information, determine the target display information corresponding to each piece of information to be displayed to obtain the at least one piece of target display information, and display the at least one piece of target display information. In this way, since the terminal device can determine at least one search mode matching the question information, the terminal device can accurately and quickly acquire the answer to the question based on the search mode, thereby improving the accuracy and efficiency of the retrieved answers. In addition, since the terminal device can determine the answer to the question based on the answer information obtained in each search mode, the reliability of the retrieved answers can be improved.

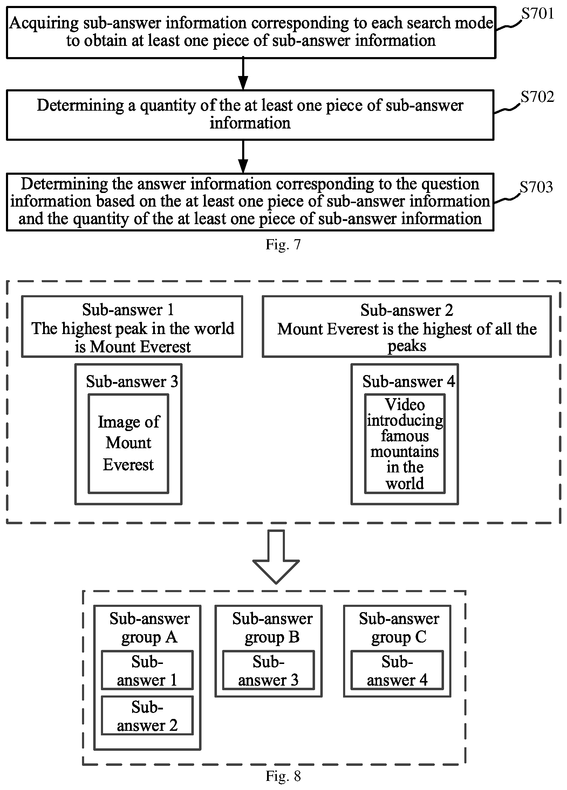

On the basis of the embodiment shown in Fig. 2, the method for processing the question information based on at least one search mode to obtain the answer information corresponding to the question information in the above-mentioned question answering search method is described below in detail with reference to Fig. 7.

Fig. 7 is a schematic diagram of a method for determining answer information according to an embodiment of the present disclosure. Referring to Fig. 7, a process of the method includes the following steps.

S701: acquiring sub-answer information corresponding to each search mode to obtain at least one piece of sub-answer information.

The sub-answer information is obtained by processing the question information using the search mode. For example, when the terminal device determines that the question information corresponds to the search mode of web-wide resource mining, the terminal device may process the question information based on the mode of web-wide resource mining, to obtain the sub-answer information corresponding to the question information. For example, when the terminal device determines that the question information corresponds to the search modes of web-wide resource mining and structured data query, the terminal device may process the question information based on the mode of web-wide resource mining to obtain sub-answer information 1, and the terminal device may process the question information based on the mode of structured data query to obtain sub-answer information 2.

It should be noted that the terminal device may process the question information using the search mode based on any feasible implementation to obtain the sub-answer information. This is not limited in this embodiment of the present disclosure.

S702: determining a quantity of the at least one piece of sub-answer information.

It should be noted that one search mode may also be used to obtain a plurality of pieces of sub-answer information. For example, when the question information corresponds to the search mode of web-wide resource mining, the terminal device may process the question information based on the mode of web-wide resource mining, to obtain one piece of sub-answer information or a plurality of pieces of sub-answer information. This is not limited in this embodiment of the present disclosure.

Optionally, the terminal device may determine the quantity of the at least one piece of sub-answer information based on any feasible implementation. This is not limited in this embodiment of the present disclosure.

S703: determining the answer information corresponding to the question information based on the at least one piece of sub-answer information and the quantity of the at least one piece of sub-answer information.

The terminal device determining the answer information corresponding to the question information based on the at least one piece of sub-answer information and the quantity of the at least one piece of sub-answer information includes the following two cases.

Case 1: The quantity of pieces of sub-answer information is 1.

In response to the quantity of the at least one piece of sub-answer information being 1, the terminal device may determine the sub-answer information as the answer information. For example, in response to acquiring only one piece of sub-answer information after the terminal device processes the question information based on the search mode, the terminal device may determine the sub-answer information as the answer information corresponding to the question information.

Case 2: The quantity of pieces of sub-answer information is greater than 1.

In response to the quantity of the at least one piece of sub-answer information being greater than 1, the terminal device may determine a similarity between a plurality of pieces of sub-answer information, and determine the answer information based on the similarity between the plurality of pieces of sub-answer information. For example, in response to acquiring a plurality of pieces of sub-answer information after the terminal device processes the question information based on a plurality of search modes, the terminal device may aggregate and summarize the plurality of pieces of sub-answer information, to obtain the answer information corresponding to the question information.

Optionally, the terminal device may determine the similarity between a plurality of sub-answers based on a similarity algorithm. For example, in response to the sub-answer information including texts, the terminal device may calculate a text similarity between the sub-answer information, to obtain the similarity between the sub-answers. In response to the sub-answer information including images, the terminal device may calculate an image similarity between the sub-answers, to obtain the similarity between the sub-answers. In response to the sub-answer information including videos, the terminal device may determine a similarity between the videos (a similarity between sub-answers) based on a similarity between titles of the videos, or the terminal device may determine the similarity between the videos based on any other feasible implementation. This is not limited in this embodiment of the present disclosure.

It should be noted that in this case, the terminal device may determine the type of the sub-answer information before determining the similarity between the sub-answer information. There is a similarity between the same type of sub-answer information, and the similarity between different types of sub-answer information is 0. For example, when the terminal device determines that the sub-answer information corresponding to the question information includes texts, images and videos, the terminal device may calculate the similarity between the texts, the similarity between the images, and the similarity between the videos, respectively, where the similarity between the text and the image is 0, the similarity between the text and the video is 0, and the similarity between the image and the video is also 0.

Optionally, the terminal device determining the answer information based on the similarity between the at least one piece of sub-answer information may specifically include: grouping the at least one piece of sub-answer information based on the similarity between the at least one piece of sub-answer information to obtain at least one sub-answer information group, determining target sub-answer information corresponding to each sub-answer information group, and determining that the answer information includes the target sub-answer information corresponding to each sub-answer information group.

The similarity between each sub-answer information in the sub-answer information group is greater than or equal to a preset similarity. For example, in response to the sub-answer information being a text 1, a text 2, an image and a video, where a similarity between the text 1 and the text 2 is greater than a preset threshold, the terminal device may determine three sub-answer information groups, where the first sub-answer information group includes the text 1 and the text 2, the second sub-answer information group includes the image, and the third sub-answer information group includes the video.

The process of determining the sub-answer information groups is described below with reference to Fig. 8.

Fig. 8 is a schematic diagram of a process of determining sub-answer information groups according to an embodiment of the present disclosure. Referring to Fig. 8, a sub-answer 1, a sub-answer 2, a sub-answer 3 and a sub-answer 4 are included. The sub-answer 1 includes the text "The highest peak in the world is Mount Everest", the sub-answer 2 includes the text "Mount Everest is the highest of all the peaks", the sub-answer 3 includes an image of Mount Everest, and the sub-answer 4 includes a video introducing famous mountains in the world.

Referring to Fig. 8, the terminal device (not shown in Fig. 8) may determine that the text similarity between the sub-answer 1 and the sub-answer 2 is greater than a preset threshold. Since the sub-answer 3 is an image and the sub-answer 4 is a video, the similarity between the sub-answer 3 and the sub-answer 1 and the similarity between the sub-answer 2 and the sub-answer 3 are less than the preset threshold, and the similarity between the sub-answer 4 and the sub-answer 1 and the similarity between the sub-answer 4 and the sub-answer 2 are less than the preset threshold.

Referring to Fig. 8, the terminal device may obtain a sub-answer group A, a sub-answer group B and a sub-answer group C based on the similarity between the sub-answers. The sub-answer group A includes the sub-answer 1 and the sub-answer 2, the sub-answer group B includes the sub-answer 3 (the image of Mount Everest), and the sub-answer group C includes the sub-answer 4 (the video introducing famous mountains in the world). In this way, the terminal device can accurately group the sub-answer information based on the similarity between the sub-answer information, thereby improving the diversity of the answer information and the accuracy of answers.

Optionally, the target sub-answer information may be an answer extracted from the sub-answer information group by the terminal device. For example, in response to the sub-answer information group including a plurality of texts, the terminal device may aggregate, summarize and integrate the plurality of texts, to obtain the target sub-answer information corresponding to the sub-answer information group. This can avoid repeated display of the answers and improve the display effect of the answer. For example, in response to the sub-answer information group including a plurality of images, the terminal device may filter the plurality of images (it may arbitrarily select at least one image or may determine at least one image based on information such as the resolution of the image, which is not limited in this embodiment of the present disclosure), to obtain the target sub-answer information corresponding to the sub-answer information group. For example, in response to the sub-answer information group including a plurality of videos, the terminal device may filter the plurality of videos (it may arbitrarily select at least one video or may determine at least one video based on information such as the clarity and frame rate of the video, which is not limited in this embodiment of the present disclosure), to obtain the target sub-answer information corresponding to the sub-answer information group.

Optionally, the terminal device may determine that the answer information corresponding to the question information includes the target sub-answer information corresponding to each sub-answer information group. For example, in response to the target sub-answer information for the sub-answer information group A being a text, the target sub-answer information for the sub-answer information group B is an image, and the target sub-answer information for the sub-answer information group C is a video, the terminal device may determine that the answer information corresponding to the question information includes the text, the image and the video.

The embodiments of the present disclosure provide a method for determining answer information. The sub-answer information corresponding to each search mode is acquired to obtain the at least one piece of sub-answer information, and the quantity of the at least one piece of sub-answer information is determined. In response to the quantity of the at least one piece of sub-answer information being 1, the terminal device may determine the sub-answer information as the answer information. In response to the quantity of the at least one piece of sub-answer information being greater than 1, the terminal device may determine the similarity between the plurality of pieces of sub-answer information, and determine the answer information based on the similarity between the plurality of pieces of sub-answer information. In this way, the terminal device can aggregate and summarize the answers obtained in various search modes, thereby improving the diversity and accuracy of the answers.

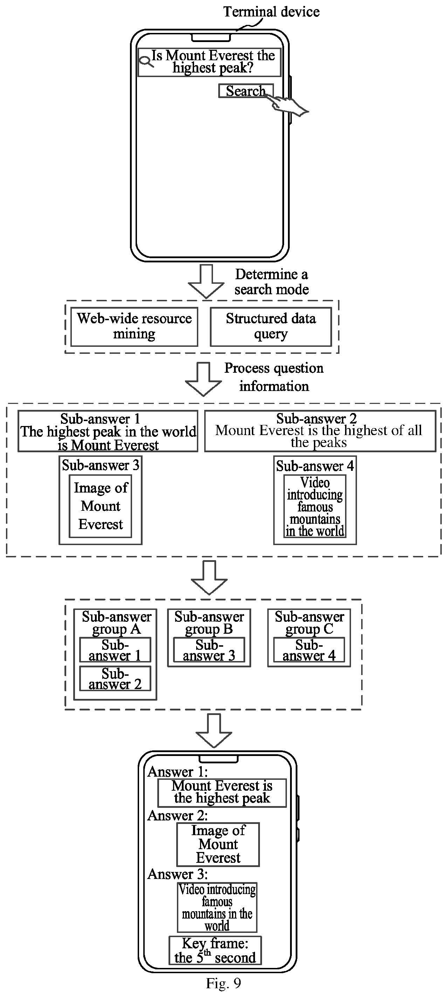

On the basis of any one of the above-mentioned embodiments, a process of the above-mentioned question answering search method is described below in detail with reference to Fig. 9.

Fig. 9 is a schematic diagram of a process of a question answering search method according to an embodiment of the present disclosure. Referring to Fig. 9, the terminal device is included. A display page of the terminal device is a search page, and the search page includes a search bar and a search control. A user enters question information "Is Mount Everest the highest peak?" in the search bar and taps the search control. The terminal device may determine that the question information corresponds to the search modes of web-wide resource mining and structured data query.

Referring to Fig. 9, the terminal device processes the question information based on the mode of web-wide resource mining to obtain the sub-answer 1 and the sub-answer 3. The sub-answer 1 is the text "The highest peak in the world is Mount Everest", and the sub-answer 3 is the image of Mount Everest. The terminal device processes the question information based on the mode of structured data query to obtain the sub-answer 2 and the sub-answer 4. The sub-answer 2 is the text "Mount Everest is the highest of all the peaks", and the sub-answer 4 is the video introducing famous mountains in the world.

Referring to Fig. 9, based on the similarity between the sub-answer 1, the sub-answer 2, the sub-answer 3, and the sub-answer 4, the terminal device groups the sub-answer 1 and the sub-answer 2 into the sub-answer group A, the sub-answer 3 into the sub-answer group B, and the sub-answer 4 into the sub-answer group C. The sub-answer group A includes the sub-answer 1 and the sub-answer 2, the sub-answer group B includes the sub-answer 3, and the sub-answer group C includes the sub-answer 4.

Referring to Fig. 9, the terminal device may determine that the target sub-answer information corresponding to the sub-answer group A is the text "Mount Everest is the highest peak". The terminal device may determine that the target sub-answer information corresponding to the sub-answer group B is the image of Mount Everest. The terminal device may determine that the target sub-answer information corresponding to the sub-answer group C is the video introducing famous mountains in the world.

Referring to Fig. 9, the terminal device may display the answers in the display page, where the answer 1 is the text "Mount Everest is the highest peak", the answer 2 is the image of Mount Everest, and the answer 3 is the video introducing famous mountains in the world, and a key frame: the 5^{th} second (i.e., the introduction to Mount Everest starts at the 5^{th} second). When the user taps the key frame: at the 5^{th} second, the terminal device may play the 5^{th} second of the video introducing famous mountains in the world.

In this way, since the terminal device can determine at least one search mode matching the question information, the terminal device can accurately and quickly acquire the answer to the question based on the search mode, thereby improving the accuracy and efficiency of the retrieved answers. In addition, since the terminal device can obtain the answer corresponding to the question information by aggregating the answer information obtained in each search mode, the reliability of the retrieved answers can be improved.

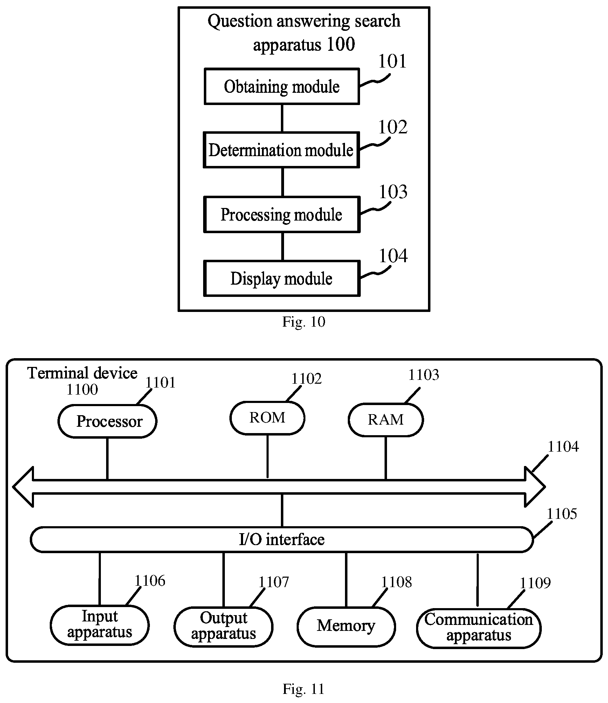

Fig. 10 is a schematic structural diagram of a question answering search apparatus according to an embodiment of the present disclosure. Referring to Fig. 10, the question answering search apparatus 100 includes an acquisition module 101, a determination module 102, a processing module 103, and a display module 104, where
the acquisition module 101 is configured to acquire question information;
the determination module 102 is configured to determine, from a plurality of search modes, at least one search mode corresponding to the question information based on the question information;
the processing module 103 is configured to process the question information based on the at least one search mode to obtain answer information corresponding to the question information; and the display module 104 is configured to perform answer display based on the answer information.

According to one or more embodiments of the present disclosure, the determination module 102 is specifically configured to:
perform semantic recognition processing on the question information to obtain target requirement information of the question information; and
determine the at least one search mode from the plurality of search modes based on the target requirement information.

According to one or more embodiments of the present disclosure, the determination module 102 is specifically configured to:
determine at least one question category corresponding to the question information based on the target requirement information;
determine at least one search mode corresponding to the at least one question category, where the question category is in a one-to-one correspondence with the search mode; and
determine the at least one search mode corresponding to the at least one question category as the search mode corresponding to the question information.

According to one or more embodiments of the present disclosure, the processing module 103 is specifically configured to:
acquire sub-answer information corresponding to each search mode to obtain at least one piece of sub-answer information, where the sub-answer information is obtained by processing the question information based on the search mode;
determine a quantity of the at least one piece of sub-answer information; and
determine the answer information corresponding to the question information based on the at least one piece of sub-answer information and the quantity of the at least one piece of sub-answer information.

According to one or more embodiments of the present disclosure, the processing module 103 is specifically configured to:
in response to the quantity of the at least one piece of sub-answer information being 1, determine the sub-answer information as the answer information; or
in response to the quantity of the at least one piece of sub-answer information being greater than 1, determine a similarity between a plurality of pieces of sub-answer information, and determine the answer information based on the similarity between the plurality of pieces of sub-answer information.

According to one or more embodiments of the present disclosure, the processing module 103 is specifically configured to:
group the at least one piece of sub-answer information based on the similarity between the at least one piece of sub-answer information to obtain at least one sub-answer information group, where the similarity between each piece of sub-answer information in the sub-answer information groups is greater than or equal to a preset similarity;
determine target sub-answer information corresponding to each sub-answer information group; and
determine that the answer information includes the target sub-answer information corresponding to each sub-answer information group.

According to one or more embodiments of the present disclosure, the display module 104 is specifically configured to:
extract at least one piece of information to be displayed from the answer information, where the information to be displayed includes: a text, a video, and an image;
determine target display information corresponding to each piece of information to be displayed to obtain at least one piece of target display information; and
display the at least one piece of target display information.

According to one or more embodiments of the present disclosure, the display module 104 is specifically configured to:
in response to the information to be displayed being the text, determine that the target display information is the text;
in response to the information to be displayed being the video, determine key description information corresponding to the video or determine at least one key frame in the video, and determine that the target display information includes the video and the key description information, or determine that the target display information includes the video and the at least one key frame; and
in response to the information to be displayed being the image, determine that the target display information is the image, or determine that the target display information includes the image and image description information of the image.

The question answering search apparatus provided in this embodiment of the present disclosure may be configured to perform the technical solution of the above-mentioned method embodiment. The implementation principle and technical effects thereof are similar, and are not described herein again in this embodiment.

Fig. 11 is a schematic structural diagram of an electronic device according to an embodiment of the present disclosure. Reference is made to Fig. 11, which is a schematic structural diagram of an electronic device 1100 suitable for implementing the embodiments of the present disclosure. The electronic device may include, but is not limited to, a mobile terminal such as a mobile phone, a notebook computer, a digital broadcast receiver, a personal digital assistant (PDA), a portable android device (PAD), a portable media player (PMP), and a vehicle-mounted terminal (e.g., a vehicle navigation terminal), and a fixed terminal such as a digital TV and a desktop computer. The electronic device shown in Fig. 11 is merely an example, and shall not impose any limitation on the function and scope of use of the embodiments of the present disclosure.

As shown in Fig. 11, the electronic device 1100 may include a processor 1101 (for example, a central processing unit or a graphics processing unit) that may perform a variety of appropriate actions and processing based on a program stored in a read-only memory (ROM) 1102 or a program loaded from a memory 1108 into a random-access memory (RAM) 1103. The RAM 1103 further stores various programs and data required for the operation of the electronic device 1100. The processor 1101, the ROM 1102, and the RAM 1103 are connected to one another through a bus 1104. An input/output (I/O) interface 1105 is also connected to the bus 1104.

Generally, the following means may be connected to the I/O interface 1105: an input means 1106 including, for example, a touchscreen, a touchpad, a keyboard, a mouse, a camera, a microphone, an accelerometer, and a gyroscope; an output means 1107 including, for example, a liquid crystal display (LCD), a speaker, and a vibrator; the memory 1108 including, for example, a magnetic tape and a hard disk drive; and a communication means 1109. The communication means 1109 may allow the electronic device 1100 to perform wireless or wired communication with other devices to exchange data. Although Fig. 11 shows the electronic device 1100 having various apparatuses, it should be understood that it is not required to implement or have all of the shown apparatuses. It may be an alternative to implement or have more or fewer apparatuses.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication means 1109, installed from the memory 1108, or installed from the ROM 1102. When the computer program is executed by the processor 1101, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiments.

An embodiment of the present disclosure provides a computer-readable storage medium having computer-executable instructions stored therein that, when executed by a processor, cause the question answering search method that may be involved in various above-mentioned embodiments to be implemented.

An embodiment of the present disclosure provides a computer program product including a computer program that, when executed by a processor, causes the question answering search method that may be involved in various above-mentioned embodiments to be implemented.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure. In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions. The data may include information, parameters, messages, etc., such as traffic split indication information.

According to one or more embodiments of the present disclosure, the present disclosure includes a question answering search method. The method includes:

According to one or more embodiments of the present disclosure, determining, from the plurality of search modes, the at least one search mode corresponding to the question information based on the question information includes:
performing semantic recognition processing on the question information to obtain target requirement information of the question information; and
determining the at least one search mode from the plurality of search modes based on the target requirement information.

According to one or more embodiments of the present disclosure, determining the at least one search mode from the plurality of search modes based on the target requirement information includes:
determining at least one question category corresponding to the question information based on the target requirement information;
determining at least one search mode corresponding to the at least one question category, where the question category is in a one-to-one correspondence with the search mode; and
determining the at least one search mode corresponding to the at least one question category as the search mode corresponding to the question information.

According to one or more embodiments of the present disclosure, processing the question information based on the at least one search mode to obtain the answer information corresponding to the question information includes:
acquiring sub-answer information corresponding to each search mode to obtain at least one piece of sub-answer information, where the sub-answer information is obtained by processing the question information based on the search mode;
determining a quantity of the at least one piece of sub-answer information; and
determining the answer information corresponding to the question information based on the at least one piece of sub-answer information and the quantity of the at least one piece of sub-answer information.

According to one or more embodiments of the present disclosure, determining the answer information corresponding to the question information based on the at least one piece of sub-answer information and the quantity of the at least one piece of sub-answer information includes:
in response to the quantity of the at least one piece of sub-answer information being 1, determining the sub-answer information as the answer information; or
in response to the quantity of the at least one piece of sub-answer information being greater than 1, determining a similarity between a plurality of pieces of sub-answer information, and determining the answer information based on the similarity between the plurality of pieces of sub-answer information.

According to one or more embodiments of the present disclosure, determining the answer information based on the similarity between the at least one piece of sub-answer information includes:
grouping the at least one piece of sub-answer information based on the similarity between the at least one piece of sub-answer information to obtain at least one sub-answer information group, where the similarity between each piece of sub-answer information in the sub-answer information groups is greater than or equal to a preset similarity;
determining target sub-answer information corresponding to each sub-answer information group; and
determining that the answer information includes the target sub-answer information corresponding to each sub-answer information group.

According to one or more embodiments of the present disclosure, performing answer display based on the answer information includes:
extracting at least one piece of information to be displayed from the answer information, where the information to be displayed includes: a text, a video, and an image;
determining target display information corresponding to each piece of information to be displayed to obtain at least one piece of target display information; and
displaying the at least one piece of target display information.

According to one or more embodiments of the present disclosure, for a piece of information to be displayed, determining the target display information corresponding to the information to be displayed includes:
in response to the information to be displayed being the text, determining that the target display information is the text;
in response to the information to be displayed being the video, determining key description information corresponding to the video or determining at least one key frame in the video, and determining that the target display information includes the video and the key description information, or determining that the target display information includes the video and the at least one key frame; and
in response to the information to be displayed being the image, determining that the target display information is the image, or determining that the target display information includes the image and image description information of the image.

According to one or more embodiments of the present disclosure, the present disclosure includes a question answering search apparatus. The question answering search apparatus includes an acquisition module, a determination module, a processing module, and a display module, where the acquisition module is configured to acquire question information;
the determination module is configured to determine, from a plurality of search modes, at least one search mode corresponding to the question information based on the question information;
the processing module is configured to process the question information based on the at least one search mode to obtain answer information corresponding to the question information; and the display module is configured to perform answer display based on the answer information.

According to one or more embodiments of the present disclosure, the determination module is specifically configured to:
perform semantic recognition processing on the question information to obtain target requirement information of the question information; and
determine the at least one search mode from the plurality of search modes based on the target requirement information.

According to one or more embodiments of the present disclosure, the determination module is specifically configured to:
determine at least one question category corresponding to the question information based on the target requirement information;
determine at least one search mode corresponding to the at least one question category, where the question category is in a one-to-one correspondence with the search mode; and
determine the at least one search mode corresponding to the at least one question category as the search mode corresponding to the question information.

According to one or more embodiments of the present disclosure, the processing module is specifically configured to:
acquire sub-answer information corresponding to each search mode to obtain at least one piece of sub-answer information, where the sub-answer information is obtained by processing the question information based on the search mode;
determine a quantity of the at least one piece of sub-answer information; and
determine the answer information corresponding to the question information based on the at least one piece of sub-answer information and the quantity of the at least one piece of sub-answer information.

According to one or more embodiments of the present disclosure, the processing module is specifically configured to:
in response to the quantity of the at least one piece of sub-answer information being 1, determine the sub-answer information as the answer information; or
in response to the quantity of the at least one piece of sub-answer information being greater than 1, determine a similarity between a plurality of pieces of sub-answer information, and determine the answer information based on the similarity between the plurality of pieces of sub-answer information.

According to one or more embodiments of the present disclosure, the processing module is specifically configured to:
group the at least one piece of sub-answer information based on the similarity between the at least one piece of sub-answer information to obtain at least one sub-answer information group, where the similarity between each piece of sub-answer information in the sub-answer information groups is greater than or equal to a preset similarity;
determine target sub-answer information corresponding to each sub-answer information group; and
determine that the answer information includes the target sub-answer information corresponding to each sub-answer information group.

According to one or more embodiments of the present disclosure, the display module is specifically configured to:
extract at least one piece of information to be displayed from the answer information, where the information to be displayed includes: a text, a video, and an image;
determine target display information corresponding to each piece of information to be displayed to obtain at least one piece of target display information; and
display the at least one piece of target display information.

According to one or more embodiments of the present disclosure, the display module is specifically configured to:
in response to the information to be displayed being the text, determine that the target display information is the text;
in response to the information to be displayed being the video, determine key description information corresponding to the video or determine at least one key frame in the video, and determine that the target display information includes the video and the key description information, or determine that the target display information includes the video and the at least one key frame; and
in response to the information to be displayed being the image, determine that the target display information is the image, or determine that the target display information includes the image and image description information of the image.

An embodiment of the present disclosure provides an electronic device. The electronic device includes: a processor and a memory,
where the memory stores computer-executable instructions; and
the processor executes the computer-executable instructions stored in the memory, to cause the processor to perform the question answering search method that may be involved in various above-mentioned embodiments.

An embodiment of the present disclosure provides a computer-readable storage medium having computer-executable instructions stored therein that, when executed by a processor, cause the question answering search method that may be involved in various above-mentioned embodiments to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although a plurality of specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A question answering search method, comprising:
acquiring question information;
determining, from a plurality of search modes, at least one search mode corresponding to the question information based on the question information; and
processing the question information based on the at least one search mode to obtain answer information corresponding to the question information, and performing answer display based on the answer information.

2. The method according to claim 1, wherein the determining, from a plurality of search modes, at least one search mode corresponding to the question information based on the question information, comprises:
performing semantic recognition processing on the question information to obtain target requirement information of the question information; and
determining the at least one search mode from the plurality of search modes based on the target requirement information.

3. The method according to claim 2, wherein the determining the at least one search mode from the plurality of search modes based on the target requirement information, comprises:
determining at least one question category corresponding to the question information based on the target requirement information;
determining at least one search mode corresponding to the at least one question category, wherein the question category is in a one-to-one correspondence with the search mode; and
determining the at least one search mode corresponding to the at least one question category as the search mode corresponding to the question information.

4. The method according to any one of claims 1 to 3 , wherein the processing the question information based on the at least one search mode to obtain answer information corresponding to the question information, comprises:
acquiring sub-answer information corresponding to each search mode to obtain at least one piece of sub-answer information, wherein the sub-answer information is obtained by processing the question information based on the search mode;
determining a quantity of the at least one piece of sub-answer information; and
determining the answer information corresponding to the question information based on the at least one piece of sub-answer information and the quantity of the at least one piece of sub-answer information.

5. The method according to claim 4, wherein the determining the answer information corresponding to the question information based on the at least one piece of sub-answer information and the quantity of the at least one piece of sub-answer information, comprises:
in response to the quantity of the at least one piece of sub-answer information being 1, determining the sub-answer information as the answer information; or
in response to the quantity of the at least one piece of sub-answer information being greater than 1,
determining a similarity between the at least one piece of sub-answer information, and determining the answer information based on the similarity between the at least one piece of sub-answer information.

6. The method according to claim 5, wherein the determining the answer information based on the similarity between the at least one piece of sub-answer information, comprises:
grouping the at least one piece of sub-answer information based on the similarity between the at least one piece of sub-answer information to obtain at least one sub-answer information group, wherein the similarity between each piece of sub-answer information in the sub-answer information group is greater than or equal to a preset similarity;
determining target sub-answer information corresponding to each sub-answer information group; and
determining that the answer information comprises the target sub-answer information corresponding to each sub-answer information group.

7. The method according to any one of claims 1 to 6, wherein the performing answer display based on the answer information, comprises:
extracting at least one piece of information to be displayed from the answer information, wherein the information to be displayed comprises a text, a video, and an image;
determining target display information corresponding to each piece of information to be displayed to obtain at least one piece of target display information; and
displaying the at least one piece of target display information.

8. The method according to claim 7, wherein for a piece of information to be displayed, determining the target display information corresponding to the information to be displayed, comprises:
in response to the information to be displayed being the text, determining that the target display information is the text;
in response to the information to be displayed being the video, determining key description information corresponding to the video or determining at least one key frame in the video, and determining that the target display information comprises the video and the key description information, or determining that the target display information comprises the video and the at least one key frame; and
in response to the information to be displayed being the image, determining that the target display information is the image, or determining that the target display information comprises the image and image description information of the image.

9. A question answering search apparatus, comprising:
an acquisition module, configured to acquire question information;
a determination module, configured to determine, from a plurality of search modes, at least one search mode corresponding to the question information based on the question information;
a processing module, configured to process the question information based on the at least one search mode to obtain answer information corresponding to the question information; and
a display module, configured to perform answer display based on the answer information.

10. An electronic device, comprising: a processor and a memory,
wherein the memory stores computer-executable instructions; and
the processor executes the computer-executable instructions stored in the memory, to cause the processor to perform the question answering search method according to any one of claims 1 to 8.

11. A computer-readable storage medium, wherein the computer-readable storage medium stores computer-executable instructions, and when the computer-executable instructions are executed by a processor, the processor is caused to implement the question answering search method according to any one of claims 1 to 8.
